# EUROPÄISCHE PATENTSCHRIFT

(11) **EP 2 686 582 B1**
(45) Veröffentlichungstag und Bekanntmachung des Hinweises auf die Patenterteilung: **17.06.2015**
(21) Anmeldenummer: 12701059.3
(22) Anmeldetag: 11.01.2012
(51) Int. Cl.: F16H 57/031, F16H 57/04

(54) **GETRIEBEVORRICHTUNG**
TRANSMISSION DEVICE
DISPOSITIF DE TRANSMISSION

(30) Priorität: 17.03.2011 DE 102011014380; 11.05.2011 CN 201120148816 U
(43) Veröffentlichungstag der Anmeldung: 22.01.2014
(73) Patentinhaber: Sew-Eurodrive GmbH & Co. KG, 76646 Bruchsal (DE)
(72) Erfinder: WU, Zili, Tianjin 300060 (CN)
(86) Internationale Anmeldenummer: PCT/EP2012/000100
(87) Internationale Veröffentlichungsnummer: WO 2012/123043

(56) Entgegenhaltungen:
- EP-A2- 1 610 031
- DE-A1- 3 209 514
- DE-A1-102005 031 197
- DE-U1- 8 805 009
- US-A- 2 511 479
- US-A- 2 699 841
- US-A- 2 756 614
- US-A- 2 832 230

## Beschreibung

Die Erfindung betrifft eine Getriebevorrichtung.

Es ist allgemein bekannt, dass Getriebe Verzahnungsteile aufweisen, so dass im Betrieb Wärme erzeugt wird, die ans Getriebeöl zumindest teilweise abfließt.

Aus der US 2 511 479 A sind Kühlmittel für ein Getriebe bekannt.

Aus der US 2 756 614 A ist ein Getriebe bekannt.

Aus der DE 32 09 514 A1 ist eine Getriebeanlage mit Druckschmierung bekannt, die die Merkmale des Oberbegriffs von Anspruch 1 aufweist.

Aus der DE 88 05 009 U1 ist ein Maschinengehäuse bekannt.

Aus der DE 10 2005 031 197 A1 ist ein Antrieb mit Lüfter bekannt.

Aus der US 2 832 230 A ist ein Getriebe mit vertikaler Abtriebswelle bekannt.

Aus der EP 1 610 031 A2 ist eine Schmierung für eine Geschwindigkeitswechseleinrichtung bekannt.

Der Erfindung liegt daher die Aufgabe zugrunde, ein Getriebe kompakt weiterzubilden.

Erfindungsgemäß wird die Aufgabe bei der Getriebevorrichtung nach den in Anspruch 1 angegebenen Merkmalen gelöst.

Wichtige Merkmale der Erfindung bei der Getriebevorrichtung und ein Verfahren sind, dass die Getriebevorrichtung, insbesondere Getriebe, ein zentrales Gehäuseteil aufweist, welches ein Lager einer abtreibenden und ein Lager einer eintreibenden Welle aufnimmt,
wobei das zentrale Gehäuseteil zweistückig ausgeführt ist,
wobei ein erstes Stück, insbesondere das untere Stück, Kühlrippen aufweist, welche an der Außenwandung eines im ersten Stück angeordneten Öltanks angeordnet sind und/oder an einem Teilbereich einer Außenwandung, welche als Lageraufnahme für ein Lager, insbesondere ein fettgeschmiertes Lager, der abtreibenden Welle der Getriebevorrichtung fungiert,
wobei ein zweites Stück, insbesondere das obere Stück, eine wellenartig ausgeprägte Oberflächenbereich zur Oberflächenvergrößerung aufweist.

Von Vorteil ist dabei, dass die Entwärmung verbessert ist. Insbesondere ist die Entwärmung des im Getriebe vorgesehenen Öltanks verbessert. Außerdem ist durch das Anbringen der Kühlrippen am Lagertopf des Lagers der abtreibenden Welle eine verbesserte Entwärmung dieses Lagers erreichbar, insbesondere da es fettgeschmiert ist. Mittels der zweistückigen Ausführung ist eine besonders einfache Montage ermöglicht, insbesondere ist auch eine einfache Herstellung des zentralen Gehäuseteils ermöglicht, wobei sogar eine mit geringer Teilezahl eine hohe Varianz in einer Baureihe von solchen Getriebevorrichtungen erreichbar ist, indem die Schnittstelle an der Oberseite des zweiten Stücks veränderlich ist bei unverändert bleiender Schnittstelle zwischen erstem und zweitem Stück.

Bei einer vorteilhaften Ausgestaltung ist der wellenartig ausgeprägte Oberflächenbereich auf der von dem ersten Stück abgewandten Seite des zweiten Stücks angeordnet. Von Vorteil ist dabei, dass am zweiten Stück oberflächenvergrößernde Strukturen angeordnet sind. Somit weisen erstes und zweites Stück Kühlelemente, wie Kühlrippen und/oder wellenartige Strukturen, auf und die Abfuhr der Wärme an die Umgebung ist verbessert.

Bei einer vorteilhaften Ausgestaltung ist auf der von dem ersten Stück abgewandten Seite des zweiten Stücks ein Lagerdeckel angeordnet, welcher an seiner Außenseite ebenfalls eine wellenartig ausgeprägten Oberflächenbereich zur Oberflächenvergrößerung aufweist und an seiner Innenseite einen von Öl durchströmten Hohlraum begrenzt. Von Vorteil ist dabei, dass eine effektive Kühlung des Öls ermöglicht ist.

Erfindungsgemäß ist ein Gehäusedeckel mit dem ersten und zweiten Stück verbunden, der an seiner Außenseite ebenfalls einen wellenartig ausgeprägten Oberflächenbereich zur Oberflächenvergrößerung aufweist. Von Vorteil ist dabei, dass der Gehäusedeckel beide Stücke zumindest teilweise überdeckt und somit die Verbindung zwischen den beiden Stücken verstärkt, zur Temperierung beiträgt, indem Wärme eines jeweiligen Stücks aufgespreizt wird auf das jeweils andere Stück. Außerdem ist ein Montagebereich durch den Gehäusedeckel abdeckbar, der eine schnelle und einfache Montage der Verzahnungsteile ermöglicht.

Bei einer vorteilhaften Ausgestaltung sind die Kühlrippen am ersten Stück derart ausgeformt, dass die Einhüllende für die Getriebevorrichtung ein quaderförmiger Raumbereich ist. Von Vorteil ist dabei, dass die für die Getriebevorrichtung benötigte Raumbereichsform ein einfacher Quader ist und somit eine kompakte Ausführung einer Anlage mit in diese eingebauter Getriebevorrichtung ermöglicht ist.

Erfindungsgemäß ist im Getriebegehäuse ein Öltank angeordnet, der zumindest teilweise begrenzt ist durch das zentrale Gehäuseteil.

Von Vorteil ist dabei, dass im unteren Teil des Getriebes ein Öltank vorgesehen ist, in welchem das Öl sich ansammelt und somit ein Ansaugrohr einer Ölpumpe ständig mit Öl versorgbar ist, also das Ansaugen von Luft vermieden wird. Außerdem ermöglicht der Öltank die Beruhigung von Ölschaum, also die Separation von Luft und Öl. Der Öltank ist im Getriebe integriert, da er durch das zentrale Gehäuseteil zumindest teilweise begrenzt ist. Außerdem ist er in einem Beriech des Getriebes vorsehbar, wo keine Funktionsteile sind, also kein Raumbereich für die Funktion des Getriebes benötigt werden.

Erfindungsgemäß ist die Getriebevorrichtung derart montiert in einer Maschine oder Anlage, insbesondere Kühlturmanlage, dass die abtreibende Welle nach unten, also in Gravitationsrichtung, herausragt aus dem Gehäuse der Getriebevorrichtung. Von Vorteil ist dabei, dass am nach unten herausragenden Endbereich ein Lüfter eines Kühlturms antreibbar ist und somit die Unterseite dem Luftstrom dieses Lüfters aussetzbar ist. Außerdem ist das untere Lager der abtreibenden Welle fettschmierbar und mittels Labyrinthdichtung abdichtbar.

Erfindungsgemäß ist der Öltank durch das zentrale Gehäuseteil und ein mit diesem dicht verbundenen Gehäusedeckel begrenzt. Von Vorteil ist dabei, dass der Öltank durch dichtes Verbinden, insbesondere Schraubverbinden, des Gehäusedeckels mit dem zentralen Gehäuseteil herstellbar ist.

Bei einer vorteilhaften Ausgestaltung ist der Öltank über einen Kanal mit einer Ölpumpe verbunden, wobei der Kanal als Ausnehmung im zentralen Gehäuseteil ausgebildet ist, insbesondere wobei der Kanal aus Bohrungsabschnitten, insbesondere axial, also parallel zur Achsrichtung der abtreibenden Welle, und hierzu transversal verlaufenden Bohrungsabschnitten, zusammengesetzt ist. Von Vorteil ist dabei, dass die Kanäle in einfacher Weise herstellbar sind. Außerdem sind die Kanäle im zentralen Gehäuseteil integriert ausgebildet und es ist keine separate Verrohrung zur Ölführung notwendig. Das Öl ist also innerhalb des zentralen Gehäuseteils geführt und temperiert somit auch direkt das zentrale Gehäuseteil. Durch thermische Unterschiede, also unterschiedliche Temperaturen an verschiedenen Positionen des Gehäuseteils, bedingte Spannungen werden also vermindert.

Bei einer vorteilhaften Ausgestaltung sind im zentralen Gehäuseteil Kanäle ausgebildet, die vom Getriebeinnenraum in den Öltank münden,
insbesondere wobei die Kanäle jeweils aus Bohrungsabschnitten, insbesondere axial, also parallel zur Achsrichtung der abtreibenden Welle, und hierzu transversal verlaufenden Bohrungsabschnitten, zusammengesetzt sind. Von Vorteil ist dabei, dass in einfacher Weise ein Rückfluss des Öls in den Öltank erreichbar ist.

Bei einer vorteilhaften Ausgestaltung verläuft im zentralen Gehäuseteil ein Kanal von der Ölpumpe an die Oberseite der Getriebevorrichtung, wobei der Mündungsbereich von einem Lagerdeckel abgedeckt ist, der auch die Stirnseite eines der axialen Endbereiche der abtreibenden Welle abdeckt, und in einen Raumbereich, insbesondere Öltasche, mündet, der zumindest vom zentralen Gehäuseteil und vom Lagerdeckel begrenzt ist. Von Vorteil ist dabei, dass eine schmale Öltasche gebildet ist, die von dem dünnen Lagerdeckel geschützt ist und von Öl durchströmt ist. Somit ist eine hervorragende und effektive Kühlung des Öls erreichbar.

Bei einer vorteilhaften Ausgestaltung führen aus dem Raumbereich Kanäle zu zu schmierenden und/oder zu kühlenden Bereichen im Innenraum der Getriebevorrichtung, insbesondere zu einem Lager und/oder zu einem Bereich von miteinander im Eingriff stehenden Verzahnungen. Von Vorteil ist dabei, dass das gekühlte Öl den Bereichen zur Schmierung und Kühlung zuführbar ist.

Bei einer vorteilhaften Ausgestaltung ist auf der eintreibenden Welle ein Lüfter formschlüssig und/oder kraftschlüssig verbunden, dessen Kühlluftstrom am Lagerdeckel vorbeiströmt, insbesondere wobei der Kühlluftstrom durch Ausnehmungen eines Laternenflansch durchtritt, insbesondere in zur eintreibenden Welle radialer Richtung, insbesondere wobei der Laternenflansch mit dem Gehäuse, insbesondere mit dem zentralen Gehäuseteil der Getriebevorrichtung verbunden ist und an seiner von der Getriebevorrichtung abgewandten Seite mit einem Motorgehäuse verbunden ist. Von Vorteil ist dabei, dass eine effektive Kühlung bewirkbar ist.

Bei einer vorteilhaften Ausgestaltung ist das zentrale Gehäuseteil zweistückig ausgeführt, wobei zumindest ein Kanal vom oberen Stück ins untere Stück durchgeführt ist. Von Vorteil ist dabei, dass die beiden Stücke dicht verbunden sind und somit Öl durchführbar ist. Vorzugswiese wird eine Dichtung im Verbindungbereich des oberen und unteren Stücks angeordnet.

Bei einer vorteilhaften Ausgestaltung weist das untere Stück des zentralen Gehäuseteils an seiner Unterseite Kühlrippen auf, insbesondere wobei an einer den Öltank zumindest teilweise begrenzenden Wand des unteren Stücks Kühlrippen ausgebildet sind und/oder wobei an einer die Lageraufnahme zumindest teilweise begrenzenden Wand des unteren Stücks Kühlrippen ausgebildet sind. Von Vorteil ist dabei, dass eine besonders effektive Kühlung des Öltanks und des abtriebsseitigen Lagers bewirkbar ist. Außerdem sind die Kühlrippen an der Unterseite dem Kühlluftstrom des auf der abtreibenden Welle vorgesehenen Lüfters ausgesetzt und somit eine effektive Kühlung erreichbar.

Bei einer vorteilhaften Ausgestaltung ist an der Oberseite des oberen Stücks eine wellenartige Struktur als oberflächenvergrößernder Bereich ausgebildet. Von Vorteil ist dabei, dass eine verbesserte Kühlung erreichbar ist.

Bei einer vorteilhaften Ausgestaltung ist an der Außenseite des Lagerdeckels eine wellenartige Struktur als oberflächenvergrößernder Bereich ausgebildet, die im Kühlluftstrom des Lüfters angeordnet ist. Von Vorteil ist dabei, dass eine verbesserte Kühlung erreichbar ist.

Bei einer vorteilhaften Ausgestaltung ist ein Gehäusedeckel mit dem unteren und dem oberen Stück des zentralen Gehäuseteils verbunden, wobei der Gehäusedeckel seitlich angeordnet ist und/oder eine wellenartige Struktur als oberflächenvergrößernder Bereich aufweist. Von Vorteil ist dabei, dass eine verbesserte Entwärmung und eine leichtere Montage des Getriebes ermöglicht ist.

Bei einer vorteilhaften Ausgestaltung ist im zentralen Gehäuseteil ein Kanal vorgesehen, insbesondere ein aus radial und axial verlaufenden Bohrungsabschnitten zusammengesetzter Kanal,
wobei der Kanal vom oberen Stück ins untere Stück durchgeführt ist,
wobei der Kanal von der Oberseite zum Bereich des unteren Lagers der abtreibenden Welle führt, welches fettgeschmiert ist, wobei die Nachschmierung durch Einleitung von Fett in den Mündungsberiech an der Oberseite der Getriebevorrichtung ausführbar ist. Von Vorteil ist dabei, dass der Kanal bei zweistückiger Ausführung vom oberen ins untere Stück übergeht und eine Druckschmierung mit Fett ausführbar ist. Dabei ist vorteiligerweise die Verbindung vom Kanalabschnitt des oberen zum Kanalabschnitt des unteren Stücks des zentralen Gehäuseteils dicht ausgeführt.

Bei einer vorteilhaften Ausgestaltung ist am zentralen Gehäuseteil, insbesondere an einem Eckbereich des quaderförmig ausgebildeten unteren Stücks, insbesondere am unteren Stück, ein Befestigungsbereich einstückig ausgeformt, der derart in seitlicher, also radialer Richtung, sich erstreckt, dass eine in axialer Richtung verlaufende durchgehende Bohrung eingebracht ist, so dass eine Verbindungsschraube in axialer Richtung durchführbar und mit einem festen Teil der die Getriebevorrichtung aufnehmenden Anlage oder Maschine verbindbar ist. Von Vorteil ist dabei, dass ein vergrößerter Bereich für die Befestigung des Getriebes an einem festen Teil ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

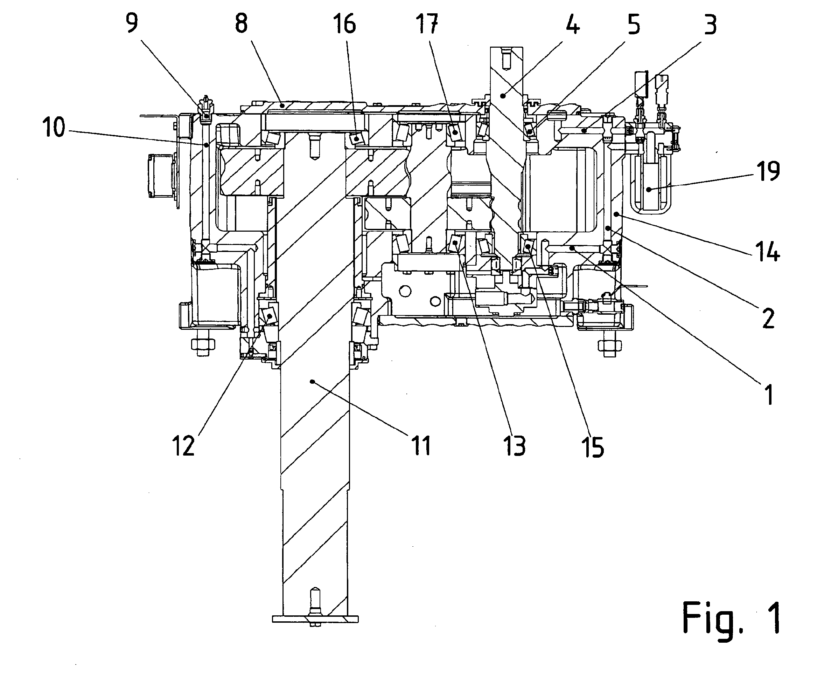

In der Figur 1 ist ein Querschnitt durch ein erfindungsgemäßes Getriebe gezeigt, wobei ein eintriebsseitiger Laternenflansch und ein von ihm gehäusebildend umgebene, auf der eintreibenden Welle vorgesehene Lüfter ausgeblendet sind.

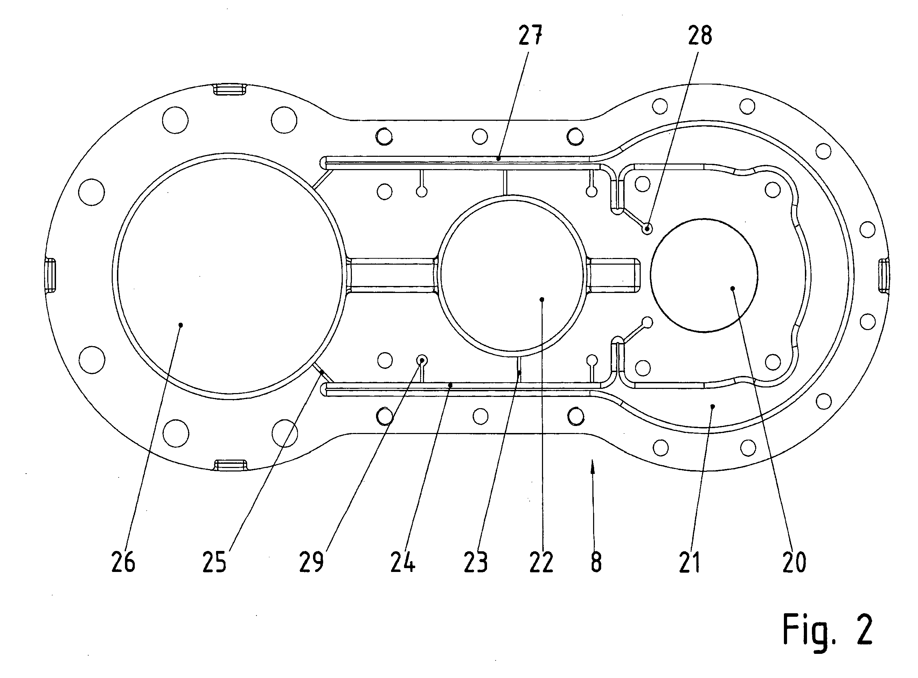

In der Figur 2 ist die eine Draufsicht auf die Innenseite des Lagerdeckels 8 gezeigt.

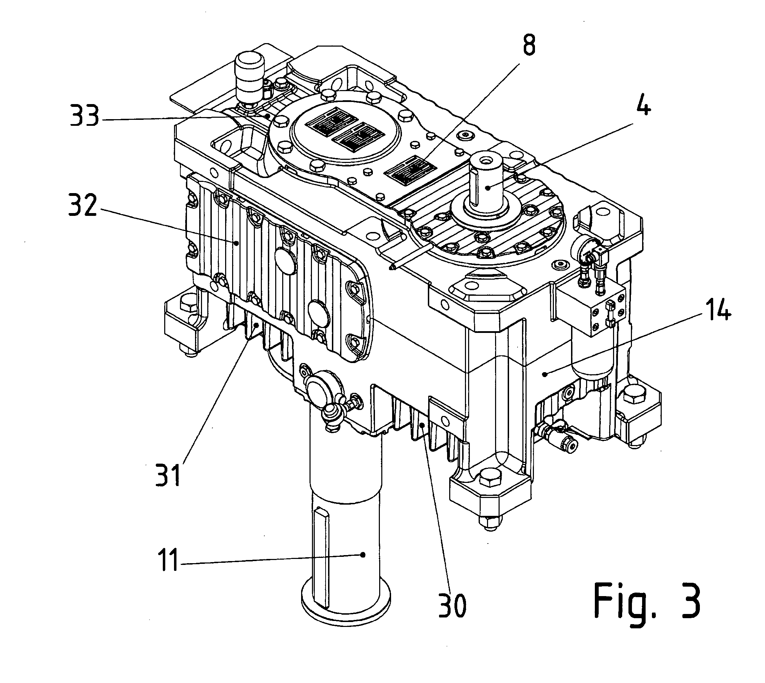

In der Figur 3 ist eine Schrägansicht auf das Getriebe gezeigt.

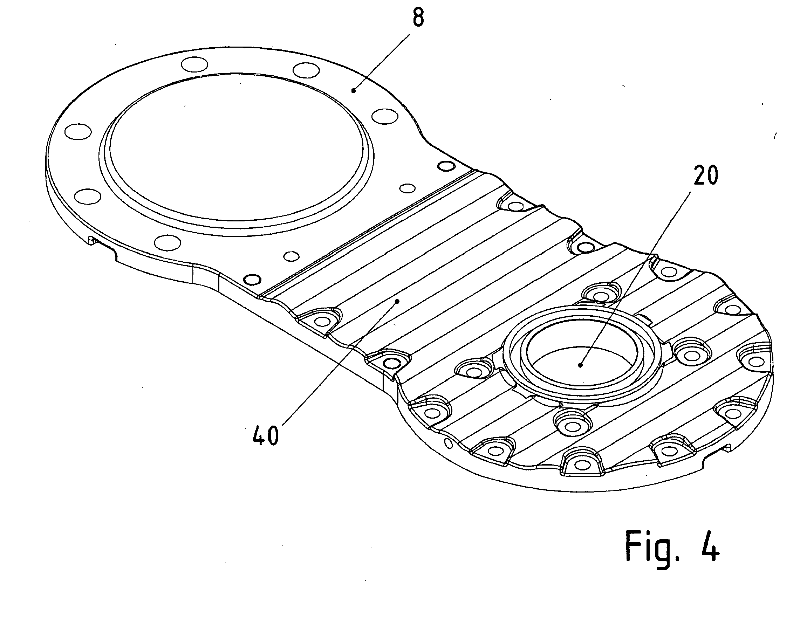

In der Figur 4 ist eine Schrägansicht auf die Außenseite des Lagerdeckels 8 gezeigt.

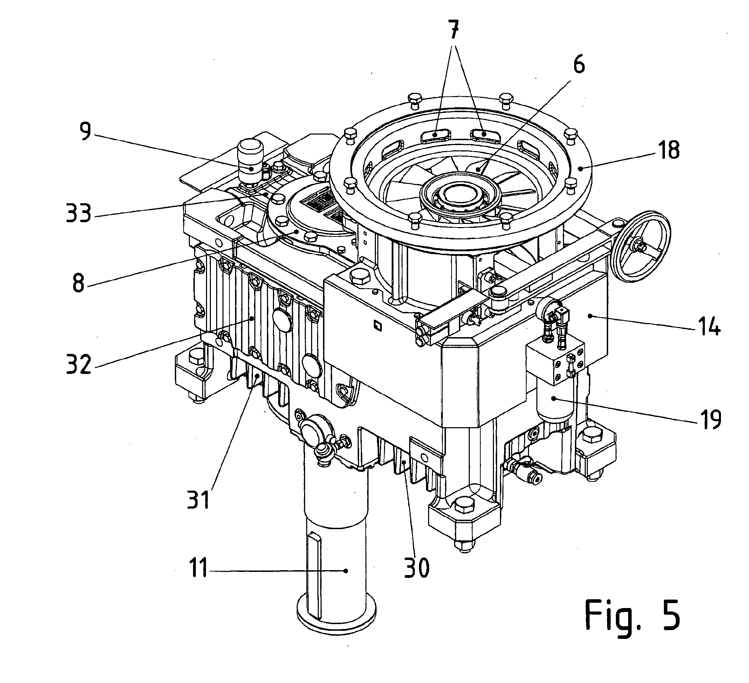

In der Figur 5 ist eine Schrägansicht auf die Außenseite des erfindungsgemäßen Getriebes gezeigt, wobei der eintriebsseitige Laternenflansch und der von ihm gehäusebildend umgebene, auf der eintreibenden Welle vorgesehene Lüfter dargestellt sind.

Dabei ist ein zentrales Gehäuseteil 14 vorgesehen, welches Lager der Wellen des Getriebes aufnimmt und an Bereichen seiner Außenoberfläche Kühlrippen und oberflächenvergrößernde wellenartige Ausformungen aufweist.

Die eintreibende Welle 4 ist über ein Lager 5 und ein Lager 15 im zentralen Gehäuseteil 14 gelagert und weist axial zwischen den Lagern 5 und 15 eine Ritzelverzahnung auf. Alternativ ist dort auch ein eintreibendes Verzahnteil kraftschlüssig und/oder formschlüssig verbindbar.

Diese Ritzelverzahnung beziehungsweise dieses Verzahnteil ist im Eingriff mit einem Verzahnteil einer Zwischenwelle, die über Lager (5, 13) ebenfalls im zentralen Gehäuseteil 14 aufgenommen ist. Dabei befindet sich das Verzahnteil der Zwischenwelle und ein weiteres Verzahnteil der Zwischenwelle axial wiederum zwischen den Lagern (5, 13).

Das weitere auf der Zwischenwelle kraftschlüssig und/oder formschlüssig verbundene Verzahnteil steht im Eingriff mit einem Verzahnteil, das kraftschlüssig und/oder formschlüssig mit der abtreibenden Welle 11 verbunden ist.

Vorzugsweise ist die Bauform, also die Ausrichtung des Getriebes in der das Getriebe umfassenden Maschine oder Anlage derart, dass die abtreibende Welle nach unten, also in Gravitationsrichtung, herausragt.

Die abtreibende Welle ist über ein unteres Lager 12 und ein oberes Lager 16 im zentralen Gehäuseteil 14 gelagert.

Im axialen Bereich des unteren Lagers 12 ist eine Fettschmierung vorgesehen. Hierzu sind Bohrkanäle 10 im zentralen Gehäuseteil 14 ausgeführt, so dass ein Kanal von der Oberseite zum axialen Bereich des unteren Lagers gebildet ist. Der Kanal 10 mündet an der Oberseite über eine Anschlussvorrichtung für Fettschmierung, die auch verschließbar ist. Auf diese Weise ist bei Wartung des Getriebes Fett unter Druck einbringbar und somit der axiale Bereich des Lagers auf der unteren Seite in komfortabler Weise von der anderen Seite des Getriebes, also der Oberseite, aus versorgbar. Daher darf das Getriebe in eine derartige Maschine oder Anlage eingebaut werden" in welcher die Unterseite unzugänglich ist. Trotzdem ist eine Wartungsschmierung in einfacher Weise ermöglicht. Insgesamt ist der Kanal 10 aus axial und radial verlaufenden Teilabschnitten zusammengesetzt, die jeweils als Bohrungen ausgeführt sind, wobei bei durchgehenden Bohrungen die jeweils ungenutzten Endbereiche der Bohrungen verschlossen sind, vorzugsweise mit einem Verschlussstopfen.

An der Oberseite ist ein Lagerdeckel 8 vorgesehen, welcher die Lageraufnahmebereiche der Lager 5, 16 und 17 abdeckt, wobei im vom Lagerdeckel 8 abgedeckten Oberflächenbereich des zentralen Gehäuseteils 14 eine Nutenstruktur eingearbeitet ist, so dass nach Aufsetzen des Lagerdeckels 8 Kanäle zum Durchleiten des Öls gebildet sind. Außerdem ist in dem abgedeckten Oberflächenbereich auch eine großflächige Vertiefung ausgebildet, so dass ein flacher Raumbereich zur Aufnahme von Öl gebildet ist, in welchen die Kanäle münden.

Alternativ oder zusätzlich ist die Nutenstruktur und die flächige Ausnehmung auch auf der Innenseite des Lagerdeckels 8 ausgebildet.

Dabei weist der Lagerdeckel 8 eine Ausnehmung 20 zur Durchführung der eintreibenden Welle auf, so dass oberhalb des zentralen Gehäuseteils 14 an der eintreibenden Welle ein Lüfter 6 verbunden, insbesondere kraftschlüssig und/oder formschlüssig, ist. Somit ist dieser Lüfter 6 in einem Gehäuseteil gehäusebildend umgeben, das als Laternenflansch 18 mit radial nach außen gerichteten Ausnehmungen 7 ausgebildet ist und auf das zentrale Gehäuseteil 14 aufgesetzt und verbunden ist.

Der vom Lüfter 6 erzeugte Luftstrom strömt am Lagerdeckel 8 vorbei, das an seiner Außenseite eine oberflächenvergrößernde wellige Kühlstruktur aufweist. Somit wird das an der Innenseite des Lagerdeckels 8 vorhandene Öl beim Durchströmen des flächigen Raumbereichs 21, insbesondere also eines taschenartigen Raumbereichs, gekühlt.

Der Lagerdeckel 8 ist im Bereich der Stirnseiten der Zwischenwelle und der abtreibenden Welle geschlossen ausgeführt und stellt somit eine Abdeckung 22 des Wellenendes der Zwischenwelle und Abdeckung 26 der abtreibenden Welle dar.

Aus dem Raumbereich 21 führen Ölkanäle 24 und 27 heraus und sind verbunden mit den Nuten (23, 25, 28, 29) zur Ölführung, mittels welcher Öl zu den Lagern der Abtriebswelle, der Zwischenwelle und/oder der eintreibenden Welle geführt wird, so dass diese stets ausreichend geschmiert sind, insbesondere beim Anlaufen des Getriebes.

Somit ist der dünnwandig ausgeführte Lagerdeckel 8 als Kühlkörper wirksam, da er auf der Oberseite des Getriebes angeordnet ist und somit dem Kühlluftstrom des auf der eintreibenden Welle oder in einem anderen Ausführungsbeispiel alternativ auf einer Zwischenwelle angeordneten Lüfters ausgesetzt. Durch die Ausbildung des düsenartig ausgeformten Laternenflansches ist ein besonders geringer Strömungswiderstand erreichbar. Die Öffnungen für den Luftdurchtritt sind seitlich angebracht, also in radialer Richtung, so dass die durchtretendes Luft nicht auf die antreibende Vorrichtung, insbesondere also Elektromotor, trifft.

Am zentralen Gehäuseteil 14 sind Wände ausgebildet, die den Öltank begrenzen. Durch den Öltank, der eine geringere Grundfläche aufweist als das Getriebe, insbesondere eine Grundfläche, die weniger als 30% der Grundfläche des Getriebes beträgt, ist es ermöglicht, dass insbesondere auch bei Stillstand des Getriebes das Öl sich im Öltank sammelt und daher ein hoher Ölstand erreichbar ist. Somit ist ein Ansaugrohr einer Ölpumpe 19 stets unter dem Ölstand, also unterhalb der Oberfläche des im Öltank sich befindenden Öls. Ein Ansaugen von Luft ist somit vermieden.

Vom Öltank zur Ölpumpe ist als Ansaugrohr ein Kanal im zentralen Gehäuseteil 14 angeordnet, der aus den Abschnitten 1 und 2 zusammengesetzt ist. Ausgangsseitig ist die Ölpumpe 19 an den Kanal 3 angeschlossen, der in durch die Ausnehmung im Lagerdeckel 8 gebildete Öltasche 21 mündet. Somit wird das warme Öl von der Ölpumpe 19 am Lagerdeckel 8 vorbeigeführt und dabei gekühlt.

Eine der Wände des Öltanks weist Aufnahmen für ein Lager der eintreibenden Welle und ein Lager der Zwischenwelle auf. In der Wand, die vorzugsweise die Oberseite des Öltanks darstellt, und/oder im zentralen Gehäuseteil 14 sind Kanäle eingearbeitet, insbesondere als Bohrungen, so dass Öl aus dem Getriebeinnenraum in den Öltank abfließt. Insbesondere bei Stillsetzen des Getriebes fließt das Öl in den Öltank.

Den Öltank begrenzende Seitenwände weisen an ihrer Außenseite Kühlrippen 30 auf, so dass eine Entwärmung des Öls im Öltank effektiv ermöglicht ist. Die Unterseite des Öltanks ist durch einen mit dem zentralen Gehäuseteil 14 dicht verbundenen Deckel gebildet. Dieser Deckel weist an seiner Außenseite eine oberflächenvergrößernde Welligkeit auf, so dass auch hierdurch die Entwärmung des Öls im Öltank verbessert ist.

Weitere Kühlrippen 31 sind am zentralen Gehäuseteil vorgesehen im Bereich der Lageraufnahme des Lagers 12 der abtreibenden Welle 11.

Somit ist einerseits das Gehäuse des Getriebes möglichst kompakt ausgeführt, wobei durch die Kühlrippenstrukturen und oberflächenvergrößernde Maßnahmen im Wesentlichen ein quaderförmiges Raumvolumen erreicht wird.

Durch die im zentralen Gehäuseteil 14 eingebrachten Bohrungen, welche als Ölkanäle wirksam sind, ist eine verbesserte Wärmeabfuhr vom Öl ans Gehäuse und von dort an die Umgebung erreicht. Insbesondere ist das Öl und das zentrale Gehäuseteil 14 auf möglichst gleichem Temperaturniveau.

Das untere Lager 12 der abtreibenden Welle ist in einer Lageraufnahme des zentralen Gehäuseteils 14 aufgenommen, wobei ein Teilbereich der Lageraufnahme auch eine Wand für den Öltank bildet, also diesen zumindest teilweise begrenzt.

Das zentrale Gehäuseteil ist vorzugsweise zweistückig ausgeführt. Somit sind im unteren Stück die Lageraufnahmen für die Lager (12, 13, 15) und der Öltank angeordnet und im oberen Stück die Lageraufnahmen für die Lager (5, 16, 17), die mittels des auf das obere Stück verbundenen Lagerdeckels 8 abgedeckt sind. Außerdem ist der Laternenflansch auf das obere Stück gesetzt und verbunden.

Das obere Stück des zentralen Gehäuseteils 14 weist an seiner Oberseite einen Bereich mit wellenartiger Ausbreitung auf, so dass auch hier eine oberflächenvergrößernde Struktur vorgesehen ist. Dieser Bereich ist an der Außenseite des Bereichs der Lageraufnahme für das obere Lager 16 angeordnet.

Ein Gehäusedeckel 32 deckt eine Öffnung im zentralen Gehäuseteil ab, so dass eine einfachere Montage ausführbar ist. Dieser Gehäusedeckel 32 weist ebenfalls eine wellenartige äußere Oberfläche als oberflächenvergrößernde Struktur auf.

Wichtig ist dabei auch, dass am unteren Stück des zentralen Gehäuseteils 14 Kühlrippen (30, 31) ausgebildet sind, wobei diese auch auf der Unterseite des Stücks angeordnet sind. Somit ist es ermöglicht, dass die abtreibende Welle 11 einen Lüfter antreibt und der in axialer Richtung angetriebene Luftstrom dann auf die Kühlrippen (30, 31) trifft. Hierdurch ist eine effektive Kühlung der Unterseite des Getriebes ermöglicht und somit insbesondere eine effektive Kühlung des im Öltank sich befindenden Öls und des unteren Lagers der abtreibenden Welle. Der abtriebsseitig erzeugte Luftstrom gelangt aber nur in geringem Umfang an die Oberseite. Daher ist an der eintreibenden Welle der Lüfter 6 aufgesetzt und kühlt den Lagerdeckel 8, so dass das an der Innenseite des Lagerdeckels 8 vorbeiströmende Öl gekühlt wird. Das im Öltank an der unteren Seite und vom Lagerdeckel an der Oberseite gekühlte Öl strömt dann den Lagern und den zu schmierenden Teilen des Getriebes, insbesondere auch den miteinander im Eingriff stehenden Verzahnungsbereichen zu und kühlt diese auch.

Bei weiteren erfindungsgemäßen Ausführungsbeispielen ist die Ölpumpe 19 zusätzlich in Reihe geschaltet mit einem Ölfilter, so dass metallischer Abrieb aus dem Öl herausfilterbar ist. Alternativ oder zusätzlich ist auch im Getriebe, insbesondere im Öltank des Getriebes ein Filter und/oder ein Dauermagnet anordenbar, so dass die metallischen, insbesondere magnetisierbaren, Partikel dort herausfilterbar sind. Zusätzlich oder alternativ sind die vom Getriebeinneren in den Öltank führenden Kanäle mit einem derart geringen Querschnitt ausgeführt, dass entsprechend zu große Partikel herausgefiltert werden. Somit sind die Kanäle als Filterstruktur wirksam.

### Bezugszeichenliste

- 1: Ölkanalabschnitt
- 2: Ölkanalabschnitt
- 3: Ölkanalabschnitt
- 4: eintreibende Welle
- 5: Lager
- 6: Lüfter
- 7: Ausnehmungen, insbesondere Luftdurchtrittsöffnungen im Laternenflansch
- 8: Lagerdeckel
- 9: Anschlussvorrichtung für Fettschmierung
- 10: Bohrung als Fettkanal
- 11: abtreibende Welle
- 12: Lager
- 13: Lager
- 14: zentrales Gehäuseteil
- 15: Lager
- 16: Lager
- 17: Lager
- 18: Gehäuseteil, insbesondere Laternenflansch
- 19: Ölpumpe
- 20: Ausnehmung zur Durchführung der eintreibenden Welle
- 21: Öltasche, Raumbereich für Öl
- 22: Abdeckung des Wellenendes der Zwischenwelle
- 23: Nut zur Ölführung
- 24: Ölkanal
- 25: Nut zur Ölführung
- 26: Abdeckung des Wellenendes der abtreibenden Welle
- 27: Ölkanal
- 28: Nut zur Ölführung
- 29: Nut zur Ölführung
- 30: Kühlrippen
- 31: Kühlrippen
- 32: seitlicher Gehäusedeckel mit wellenartiger Struktur zur Oberflächenvergrößerung
- 33: wellenartige Struktur zur Oberflächenvergrößerung

## Patentansprüche

1. Getriebevorrichtung, insbesondere Getriebe,
wobei die Getriebevorrichtung ein Gehäuse mit einem zentralen Gehäuseteil (14) aufweist, welches ein Lager einer abtreibenden Welle (11) und ein Lager einer eintreibenden Welle (4) aufnimmt,
wobei das zentrale Gehäuseteil (14) zweistückig ausgeführt ist,
wobei ein erstes Stück, insbesondere ein unteres Stück, Kühlrippen (30) aufweist, welche an der Außenwandung eines im ersten Stück angeordneten Öltanks angeordnet sind,
wobei die Getriebevorrichtung derart montiert ist in einer Maschine oder Anlage, insbesondere Kühlturmanlage, dass die abtreibende Welle (11) nach unten, also in Gravitationsrichtung, herausragt aus dem Gehäuse,
wobei der Öltank durch das zentrale Gehäuseteil (14) und ein mit diesem dicht verbundenen weiteren Gehäusedeckel begrenzt ist,
**dadurch gekennzeichnet, daß**
das erste Stück auch an einem Teilbereich einer Außenwandung, insbesondere also eines **Lagertopfes,** welche als Lageraufnahme für das Lager, insbesondere ein fettgeschmiertes Lager, der abtreibenden Welle (11) der Getriebevorrichtung fungiert, kühlrippen (31) aufweist,
wobei ein zweites Stück, insbesondere ein oberes Stück, einen wellenartig ausgeprägten Oberflächenbereich (33) zur Oberflächenvergrößerung aufweist,
wobei ein Gehäusedeckel **(32)** mit dem ersten und zweiten Stück verbunden ist, der an seiner Außenseite ebenfalls einen wellenartig ausgeprägten Oberflächenbereich zur Oberflächenvergrößerung aufweist.

2. Getriebevorrichtung nach mindestens einem der vorangegangenen Ansprüche,
**dadurch gekennzeichnet, dass**
der wellenartig ausgeprägte Oberflächenbereich (33) auf der von dem ersten Stück abgewandten Seite des zweiten Stücks angeordnet ist.

3. Getriebevorrichtung nach mindestens einem der vorangegangenen Ansprüche,
**dadurch gekennzeichnet, dass**
auf der von dem ersten Stück abgewandten Seite des zweiten Stücks ein Lagerdeckel (8) angeordnet ist, welcher an seiner Außenseite ebenfalls eine wellenartig ausgeprägten Oberflächenbereich zur Oberflächenvergrößerung aufweist und an seiner Innenseite einen von Öl durchströmten Hohlraum begrenzt.

4. Getriebevorrichtung nach mindestens einem der vorangegangenen Ansprüche,
**dadurch gekennzeichnet, dass**
die Kühlrippen (30, 31) am ersten Stück derart ausgeformt sind, dass die Einhüllende für die Getriebevorrichtung ein quaderförmiger Raumbereich ist.

5. Getriebevorrichtung nach mindestens einem der vorangegangenen Ansprüche,
**dadurch gekennzeichnet, dass**
im Gehäuse der Öltank angeordnet ist, der zumindest teilweise begrenzt ist durch das zentrale Gehäuseteil (14), insbesondere wobei ein den Öltank begrenzender Wandabschnitt des zentralen Gehäuseteils (14) an seiner Außenseite die Kühlrippen (30) aufweist.

6. Getriebevorrichtung nach mindestens einem der vorangegangenen Ansprüche,
**dadurch gekennzeichnet, dass**
der Öltank über einen ersten kanal (1,2) mit einer Ölpumpe (19) verbunden ist, wobei der erste Kanal (1,2) als Ausnehmung im zentralen Gehäuseteil (14) ausgebildet ist, insbesondere wobei der erste Kanal (1,2) aus Bohrungsabschnitten (2), insbesondere axial, also parallel zur Achsrichtung der abtreibenden Welle (11), und hierzu transversal verlaufenden Bohrungsabschnitten (1), zusammengesetzt ist.

7. Getriebevorrichtung nach mindestens einem der vorangegangenen Ansprüche,
**dadurch gekennzeichnet, dass**
im zentralen Gehäuseteil (14) zweite Kanäle ausgebildet sind, die vom Getriebeinnenraum in den Öltank münden,
insbesondere wobei die zweiten Kanäle jeweils aus Bohrungsabschnitten, insbesondere axial, also parallel zur Achsrichtung der abtreibenden Welle (10), und hierzu transversal verlaufenden Bohrungsabschnitten, zusammengesetzt sind.

8. Getriebevorrichtung nach mindestens einem der vorangegangenen Ansprüche,
**dadurch gekennzeichnet, dass**
im zentralen Gehäuseteil (14) ein dritten (3) kanal von der Ölpumpe (19) an die Oberseite der Getriebevorrichtung verläuft, wobei ein Mündungsbereich von einem Lagerdeckel (8) abgedeckt ist, der auch die Stirnseite eines der axialen Endbereiche der abtreibenden Welle (11) abdeckt, und in einen Raumbereich, insbesondere Öltasche (21), mündet, der zumindest vom zentralen Gehäuseteil (14) und vom Lagerdeckel (8) begrenzt ist.

9. Getriebevorrichtung nach Anspruch 8
**dadurch gekennzeichnet, dass**
auf der eintreibenden Welle (4) ein Lüfter (6) formschlüssig und/oder kraftschlüssig verbunden ist, dessen Kühlluftstrom am Lagerdeckel (8) vorbeiströmt, insbesondere wobei der Kühlluftstrom durch Ausnehmungen (7) eines Laternenflansch durchtritt, insbesondere in zur eintreibenden Welle (4) radialer Richtung, insbesondere wobei der Laternenflansch mit dem Gehäuse, insbesondere mit dem zentralen Gehäuseteil (14) der Getriebevorrichtung verbunden ist und an seiner von der Getriebevorrichtung abgewandten Seite mit einem Motorgehäuse verbunden ist.

10. Getriebevorrichtung nach Anspruch 9, **dadurch gekennzeichnet, daß** an der Außenseite des Lagerdeckels (8) eine wellenartige Struktur als oberflächenvergrößernder Bereich ausgebildet ist, die im Kühlluftstrom des Lüfters (6) angeordnet ist.
und/oder dass
der Gehäusedeckel mit dem ersten, unteren und dem zweiten, oberen Stück des zentralen Gehäuseteils (14) verbunden ist, wobei der Gehäusedeckel seitlich angeordnet ist,
und/oder dass
im zentralen Gehäuseteil (14) ein fünfter Kanal (10) vorgesehen ist, insbesondere ein aus radial und axial verlaufenden Bohrungsabschnitten zusammengesetzter fünfter Kanal (10),
wobei der fünfte Kanal (10) vom zweiten, oberen Stück ins erste, untere Stück durchgeführt ist,
wobei der fünfte Kanal (10) von der Oberseite zum Bereich des unteren Lagers (12) der abtreibenden Welle (11) führt, welches fettgeschmiert ist, wobei die Nachschmierung durch Einleitung von Fett in einen Mündungsbereich an der Oberseite der Getriebevorrichtung ausführbar ist,
und/oder dass
am zentralen Gehäuseteil (14), insbesondere an einem Eckbereich des quaderförmig ausgebildeten erste, unteren Stücks ein Befestigungsbereich einstückig ausgeformt ist, der derart in seitlicher, also radialer Richtung, sich erstreckt, dass eine in axialer Richtung verlaufende durchgehende Bohrung eingebracht ist, so dass eine Verbindungsschraube in axialer Richtung durchführbar und mit einem festen Teil der die Getriebevorrichtung aufnehmenden Anlage oder Maschine verbindbar ist.

11. Getriebevorrichtung nach mindestens einem der vorangegangenen Ansprüche, **dadurch gekennzeichnet, dass** aus dem Raumbereich Kanäle zu zu schmierenden und/oder zu kühlenden Bereichen im Innenraum der Getriebevorrichtung führen, insbesondere zu einem Lager und/oder zu einem Bereich von miteinander im Eingriff stehenden Verzahnungen.

12. Getriebevorrichtung nach mindestens einem der vorangegangenen Ansprüche,
**dadurch gekennzeichnet, dass**
das erste, untere Stück des zentralen Gehäuseteils (14) an seiner Unterseite die Kühlrippen (30, 31) aufweist, insbesondere wobei an einer den Öltank zumindest teilweise begrenzenden Wand des unteren Stücks Kühlrippen (30) ausgebildet sind und/oder wobei an einer die Lageraufnahme zumindest teilweise begrenzenden Wand des unteren Stücks Kühlrippen (31) ausgebildet sind,
und/oder dass
an der Oberseite des zweiten, oberen Stücks die wellenartige Struktur als oberflächenvergrößernder Bereich ausgebildet ist,

## Claims

1. Gearing device, in particular a gear unit,
the gearing device having a housing with a central housing part (14) which houses a bearing of an output shaft (11) and a bearing of an input shaft (4),
the central housing part (14) being designed as two parts,
a first part, in particular a bottom part, having cooling fins (30) which are arranged on the outer wall of an oil tank arranged inside the first part,
the gearing device being mounted in a machine or plant, in particular cooling tower plant, in such a way that the output shaft (11) projects out of the housing downwards, i.e. in the direction of gravity,
the oil tank being delimited by the central housing part (14) and an additional housing cover sealingly connected to the latter, **characterized in that**
the first part also has cooling fins (31) on a partial region of an outer wall, i.e. in particular of a bearing well which acts as bearing seat for the bearing, in particular a grease-lubricated bearing, of the output shaft (11)of the gearing device,
a second part, in particular a top part, having a surface region (33) with a corrugated design for surface enlargement,
a housing cover (32) being connected to the first and second parts and having on its outer side also a surface region with a corrugated design for surface enlargement.

2. Gearing device according to at least one of the preceding claims, **characterized in that**
the surface region (33) with the corrugated design is arranged on the side of the second part directed away from the first part.

3. Gearing device according to at least one of the preceding claims, **characterized in that** a bearing cover (8) is arranged on the side of the second part directed away from the first part, said bearing cover also having on its outer side a surface region with a corrugated design for surface enlargement and delimiting on its inner side a cavity through which oil flows.

4. Gearing device according to at least one of the preceding claims, **characterized in that** the cooling fins (30, 31) are formed on the first part in such a way that the contour for the gearing device is a square-shaped spatial region.

5. Gearing device according to at least one of the preceding claims, **characterized in that** the oil tank is arranged inside the housing and is at least partially delimited by the central housing part (14), in particular a wall section of the central housing part (14) which delimits the oil tank having the cooling fins (30) on its outer side.

6. Gearing device according to at least one of the preceding claims, **characterized in that** the oil tank is connected via a first duct (1,2) to an oil pump (19), the first duct (1,2) being formed as a recess in the central housing part (14), in particular the first duct (1,2) being composed of bore-hole sections (2), in particular axially, i.e. parallel to the axial direction of the output shaft (11), and bore-hole sections (1) extending transversely with respect thereto.

7. Gearing device according to at least one of the preceding claims, **characterized in that** second ducts which lead from the internal space of the gear unit into the oil tank are formed in the central housing part (14), in particular the second ducts in each case being composed of bore-hole sections, in particular axially, i.e. parallel to the axial direction of the output shaft (11), and bore-hole sections extending transversely thereto.

8. Gearing device according to at least one of the preceding claims, **characterized in that** a third duct (3) extends inside the central housing part (14) from the oil pump (19) to the top side of the gearing device, an inlet region being covered by a bearing cover (8) also covering the end face of one of the axial end regions of the output shaft (11), and leads into a spatial region, in particular an oil pocket (21) which is delimited at least by the central housing part (14) and by the bearing cover (8).

9. Gearing device according to Claim 8, **characterized in that** a ventilator (6) is connected in a form-locking and/or force-fitted manner on the input shaft (4), the cooling air stream thereof flowing past the bearing cover (8), in particular the cooling air stream entering through recesses (7) of a lantern flange, in particular in a radial direction with respect to the input shaft (4), in particular the lantern flange being connected to the housing, in particular to the central housing part (14) of the gearing device and being connected on its side directed away from the gearing device to an engine housing.

10. Gearing device according to Claim 9, **characterized in that** a corrugated structure is formed on the outer side of the bearing cover (8) as a surface-enlarging region and is arranged within the cooling air stream of the ventilator (6).

11. Gearing device according to at least one of the preceding claims, **characterized in that** ducts lead from the spatial region to regions inside the internal space of the gearing device to be lubricated and/or to be cooled, in particular to a bearing and/or to a region with toothings meshing with each other.

12. Gearing device according to at least one of the preceding claims, **characterized in that** the first bottom part of the central housing part (14) has the cooling fins (30, 31) on its bottom side, in particular cooling fins (30) being formed on a wall of the bottom part delimiting at least partially the oil tank and/or cooling fins (31) being formed on a wall of the bottom part delimiting at least partially the bearing seat,
and/or **in that**
the corrugated structure is formed on the top side of the second top part as a surface-enlarging region,
and/or **in that**
the housing cover is connected to the first bottom part and the second top part of the central housing part (14), the housing cover being arranged laterally,
and/or **in that**
a fifth duct (10) is provided in the central housing part (14), in particular a fifth duct (10) composed of radially and axially extending bore-hole sections,
the fifth duct (10) passing through from the second top part into the first bottom part,
the fifth duct (10) leading from the top side to the region of the bottom bearing (12) of the output shaft (11), which is grease-lubricated, the relubrication being performed by introducing grease into an inlet region on the top side of the gearing device,
and/or **in that**
a fastening region is formed as one piece on the central housing part (14), in particular on a corner region of the square-shaped first bottom part, said fastening region extending in a lateral, i.e. radial direction in such a way that a through bore-hole extending in an axial direction is made so that a connecting screw can be introduced in an axial direction and can be connected with a fixed part of the plant or machine which houses the gearing device.

## Revendications

1. Dispositif de transmission, en particulier boîte de vitesses,
sachant que le dispositif de transmission présente un carter avec un élément central de carter (14) dans lequel sont logés un palier d'un arbre de sortie (11) et un palier d'un arbre d'entrée (4),
sachant que l'élément central de carter (14) est réalisé en deux parties,
sachant qu'une première partie, en particulier une partie inférieure, présente des ailettes de refroidissement (30), qui sont disposées sur la paroi extérieure d'un réservoir d'huile disposé dans la première partie,
sachant que le dispositif de transmission est monté dans une machine ou une installation, en particulier une installation de tour de refroidissement, de telle sorte que l'arbre de sortie (11) dépasse hors du carter vers le bas, donc dans la direction de gravitation, sachant que le réservoir d'huile est délimité par l'élément central de carter (14) et par un couvercle de carter supplémentaire assemblé en étanchéité à celui-ci,
**caractérisé en ce que** la première partie présente également des ailettes de refroidissement (31) sur une région partielle d'une paroi extérieure, en particulier donc d'une cuvette de palier qui sert de logement pour le palier, en particulier un palier lubrifié à la graisse, de l'arbre de sortie (11) du dispositif de transmission,
sachant qu'une deuxième partie, en particulier une partie supérieure, présente une région de surface (33) marquée par des ondulations qui permettent un agrandissement de ladite surface,
sachant qu'un couvercle de carter (22) est assemblé à la première et à la deuxième parties, et présente lui aussi sur son côté extérieur une région de surface marquée par des ondulations qui permettent un agrandissement de ladite surface.

2. Dispositif de transmission selon au moins une des revendications précédentes, **caractérisé en ce que** la région de surface (33) marquée par des ondulations est disposée sur le côté de la deuxième partie qui est éloigné de la première partie.

3. Dispositif de transmission selon au moins une des revendications précédentes, **caractérisé en ce qu'**un chapeau de palier (8) est disposé sur le côté de la deuxième partie qui est éloigné de la première partie, chapeau qui présente lui aussi sur son côté extérieur une région de surface marquée par des ondulations qui permettent un agrandissement de ladite surface, et qui délimite sur son côté intérieur une cavité traversée par un flux d'huile.

4. Dispositif de transmission selon au moins une des revendications précédentes, **caractérisé en ce que** les ailettes de refroidissement (30, 31) sont formées sur la première partie de telle sorte que l'enveloppante pour le dispositif de transmission est une région spatiale parallélépipédique.

5. Dispositif de transmission selon au moins une des revendications précédentes, **caractérisé en ce que** le réservoir d'huile est disposé dans le carter et est au moins partiellement délimité par l'élément central de carter (14), sachant en particulier qu'une portion de paroi, délimitant le réservoir d'huile, de l'élément central de carter (14) présente sur son côté extérieur les ailettes de refroidissement (30).

6. Dispositif de transmission selon au moins une des revendications précédentes, **caractérisé en ce que** le réservoir d'huile est relié par l'intermédiaire d'un premier canal (1, 2) à une pompe à huile (19), sachant que le premier canal (1, 2) est réalisé sous la forme d'un évidement dans l'élément central de carter (14), sachant en particulier que le premier canal (1, 2) est constitué de portions de perçages (2) s'étendant notamment axialement, donc parallèlement à la direction axiale de l'arbre de sortie (11), et de portions de perçages (1) s'étendant transversalement à la direction précédente.

7. Dispositif de transmission selon au moins une des revendications précédentes, **caractérisé en ce que** des deuxièmes canaux, qui débouchent depuis l'espace intérieur de la boîte de vitesses dans le réservoir d'huile, sont formés dans l'élément central de carter (14),
sachant en particulier que les deuxième canaux sont respectivement constitués de portions de perçages s'étendant notamment axialement, donc parallèlement à la direction axiale de l'arbre de sortie (11), et de portions de perçages s'étendant transversalement à la direction précédente.

8. Dispositif de transmission selon au moins une des revendications précédentes, **caractérisé en ce qu'**un troisième canal (3) s'étend dans l'élément central de carter (14) de la pompe à huile (19) au côté supérieur du dispositif de transmission, sachant qu'une région d'embouchure est recouverte par un chapeau de palier (8) qui recouvre également le côté frontal d'une des régions terminales axiales de l'arbre de sortie (11), et débouche dans une région spatiale, en particulier une poche d'huile (21), qui est délimitée au moins par l'élément central de carter (14) et par le chapeau de palier (8).

9. Dispositif de transmission selon la revendication 8, **caractérisé en ce qu'**un ventilateur (6) est monté en engagement positif et/ou à force sur l'arbre d'entrée (4), dont le flux d'air de refroidissement balaye le chapeau de palier (8), sachant en particulier que le flux d'air de refroidissement passe à travers des évidements (7) d'un support lanterné, en particulier en direction radiale vers l'arbre d'entrée (4), sachant en particulier que le support lanterné est assemblé au carter, en particulier à l'élément central de carter (14) du dispositif de transmission, et est assemblé, sur son côté éloigné du dispositif de transmission, à un carter moteur.

10. Dispositif de transmission selon la revendication 9, **caractérisé en ce qu'**une structure ondulée est formée sur le côté extérieur du chapeau de palier (8) comme région agrandissant la surface, et elle est disposée dans le flux d'air de refroidissement du ventilateur (6).

11. Dispositif de transmission selon au moins une des revendications précédentes, **caractérisé en ce que** des canaux mènent depuis la région spatiale vers des régions à lubrifier et/ou à refroidir dans l'espace intérieur du dispositif de transmission, en particulier vers un palier et/ou vers une région d'engrenages en prise mutuelle.

12. Dispositif de transmission selon au moins une des revendications précédentes, **caractérisé en ce que** la première partie, inférieure, de l'élément central de carter (14) présente sur son côté inférieur les ailettes de refroidissement (30, 31), sachant en particulier que des ailettes de refroidissement (30) sont formées sur une paroi de la partie inférieure qui délimite au moins partiellement le réservoir d'huile, et/ou sachant que des ailettes de refroidissement (31) sont formées sur une paroi de la partie inférieure qui délimite au moins partiellement le logement de palier,
et/ou **en ce que** la structure ondulée prévue comme région agrandissant la surface est réalisée sur le côté supérieur de la deuxième partie, supérieure,
et/ou **en ce que** le couvercle de carter est assemblé à la première partie, inférieure et à la deuxième partie, supérieure de l'élément central de carter (14), sachant que le couvercle de carter est disposé latéralement,
et/ou **en ce qu'**un cinquième canal (10) est prévu dans l'élément central de carter (14), en particulier un cinquième canal (10) constitué de portions de perçages s'étendant radialement et axialement,
sachant que le cinquième canal (10) est dirigé depuis la deuxième partie, supérieure dans la première partie, inférieure,
sachant que le cinquième canal (10) mène depuis le côté supérieur vers la région du palier inférieur (12) de l'arbre de sortie (11), qui est lubrifié à la graisse, sachant que le regraissage peut être effectué par introduction de graisse dans une région d'embouchure sur le côté supérieur du dispositif de transmission,
et/ou **en ce qu'**une région de fixation est formée d'un seul tenant sur l'élément central de carter (14), en particulier dans une région de coin de la première partie, inférieure, réalisée parallélépipédique, région qui s'étend en direction latérale, donc radiale, de telle sorte qu'un perçage traversant s'étendant en direction axiale est ménagé, de sorte qu'on peut faire passer en direction axiale une vis d'assemblage et l'assembler à une partie fixe de l'installation ou de la machine recevant le dispositif de transmission.
